Europäisches Patentamt

European Patent Office

Office européen des brevets

(11) Veröffentlichungsnummer: **0 504 689 A2**

# (12) EUROPÄISCHE PATENTANMELDUNG

(21) Anmeldenummer: **92103939.2**

(22) Anmeldetag: **07.03.92**

(51) Int. Cl.5: **B32B 5/18**, B32B 27/20, B29C 47/06, B29D 9/00

(30) Priorität: **16.03.91 DE 4108654**

(43) Veröffentlichungstag der Anmeldung: **23.09.92 Patentblatt 92/39**

(84) Benannte Vertragsstaaten: **BE DE FR GB IT NL**

(71) Anmelder: **BASF Aktiengesellschaft Carl-Bosch-Strasse 38 W-6700 Ludwigshafen(DE)**

(72) Erfinder: **Buchert, Hermann, Dr. An der Nolzeruhe 8c W-6702 Bad Duerkheim(DE)**
Erfinder: **Koch, Eckhard Michael, Dr. Merowingerstrasse 8 W-6701 Fussgoenheim(DE)**
Erfinder: **Graalmann, Onno, Dr. Lorscher Weg 16 W-6915 Dossenheim(DE)**
Erfinder: **Hesse, Guenter Birkenstrasse 8 W-6711 Gerolsheim(DE)**

(54) Thermplastisch verformbare, mehrschichtige Platte, insbesondere für den Innenausbau von Verkehrsflugzeugen und anderen Massentransportmitteln.

(57) Thermoplastisch verformbare, mehrschichtige Platte, bestehend aus mindestens einer Deckschicht und einer zweiten, durch Aufschäumen erhaltenen Schicht bzw. Mittelschicht, wobei mindestens die bzw. eine der Schichten mit einem brandverzögernden Zusatz versetzt ist und im übrigen im wesentlichen aus einem hochtemperaturbeständigen Polymerwerkstoff, ausgewählt aus Polysulfon, Polyethersulfon, Polyetherimid und Polyetherketon besteht.

EP 0 504 689 A2

Die Erfindung betrifft eine thermoplastisch verformbare, brandgeschützte Platte, aus der Teile für den Innenausbau von Flugzeugen und Massentransportmitteln hergestellt werden können.

Für den Innenausbau von Passagierflugzeugen werden leichtgewichtige Werkstoffe eingesetzt, die den Vorschriften der FAR 25.853 und/oder der ATS 1000.001 entsprechen müssen. In diesen Vorschriften sind Maximalwerte für die Wärmeentwicklung, für die Rauchentwicklung und die Konzentration von giftigen Bestandteilen in gasförmigen Verbrennungsprodukten solcher Werkstoffe festgelegt.

Derzeit werden viele dieser Teile als Sandwich-Strukturen aus duroplastischen Verbundwerkstoffen ausgebildet. Sie bestehen meist aus einer Innenschicht mit Honigwabenstruktur, auf die auf beiden Seiten Glasfasergewebe aufgeklebt sind, die mit Phenol-Formaldehydharzen getränkt und duroplastisch ausgehärtet sind. Diese Platten sind leicht und biegesteif, haben aber eine Reihe von Nachteilen:

FAR 25.853 fordert als Kriterium für die Wärmeentwicklung einen Spitzenwert der Wärmeentwicklung (Heat Release Rate), der 65 KW/m$^2$ nicht übersteigt.

Diese Bedingung wird von den bekannten Werkstoffen zwar in der Regel eben erfüllt; die Ergebnisse für die aus Phenol-Formaldehyd-Glasgewebe bestehenden Deckschichten liegen nahe am zulässigen Maximalwert.

Es kommt aber immer wieder vor, daß fertige Verbundwerkstoffplatten aus solchen Honigwaben-(honeycomb-)strukturen, Klebern und Phenol-Formaldehydharz-Glasgeweben den Test nicht bestehen, obwohl repräsentative Muster der Komponenten der Platten die geforderten Grenzwerte nicht überschreiten. Damit ist eine wesentliche Voraussetzung für den Einsatz dieser Sandwich-Platten nicht erfüllt.

Es ist daher eine Aufgabe der Erfindung, Werkstoffe für den Innenausbau von öffentlichen Verkehrsmitteln zu schaffen, die die geschilderten Probleme nicht bieten und zudem kostengünstig herzustellen und zu verarbeiten sind.

Die Aufgabe wird erfindungsgemäß gelöst durch eine thermoplastisch verarbeitbare Platte, die aus einer oder zwei massiven Deckschichten aus thermoplastisch verformbarem Werkstoff und einer gegebenenfalls dazwischenliegenden Schicht aus thermoplastisch verformbarem Schaum aus vorzugsweise dem gleichen Werkstoff wie die Deckschicht(en) besteht.

Unmittelbarer Erfindungsgegenstand ist eine thermoplastisch verformbare, mehrschichtige Platte, die aus mindestens einer Deckschicht und einer zweiten, durch Aufschäumen erhaltenen Schicht bzw. Mittelschicht besteht. Erfindungsgemäß ist mindestens eine der Schichten mit einem brandverzögernden Zusatz versetzt und besteht im übrigen im wesentlichen aus einem hochtemperaturbeständigen Polymerwerkstoff, ausgewählt aus Polysulfon, Polyethersulfon, Polyetherimid und Polyetherketon. Polyethersulfon ist bevorzugt. Als brandverzögernden Zusatz verwendet man bevorzugt einen weißen (farblosen) anorganischen Zusatz, der bei der Verbrennung keine toxischen Gase entwickelt oder freisetzt: insbesondere eignet sich Boroxid, Zinkborat und/oder Antimontrioxid. Ferner kann der Deckschichtwerkstoff Verstärkungsmittel (z.B. Mineralfasern, Mineralien), Pigmente und sonstige Hilfsmittel enthalten.

Die geschäumte Schicht bzw. Mittelschicht besteht vorzugsweise aus dem gleichen Werkstoff wie die Deckschicht(en).

Die Herstellung der mehrschichtigen Platte gestaltet sich am einfachsten durch gleichzeitige Extrusion der für Deckschicht(en) und Mittelschicht bestimmten Rohstoffe (Co-Extrusion) mit vorzugsweise zwei auf eine gemeinsame Schlitzdüse arbeitenden Extrudern. Geeignete Vorrichtungen sind handelsüblich.

Es ist jedoch ebenso möglich die mehrschichtige Platte dadurch herzustellen, daß zunächst die Mittelschicht extrudiert wird. Die so erhaltene Schaumplatte wird anschließend von einer oder mehreren Seiten erwärmt, wodurch deren Oberfläche(n) anschmelzen und sich unter Druck formen bzw. prägen lassen. Geeignete Wärmequellen und Prägevorrichtungen sind handelsüblich.

Die Deckschicht(en) oder auch die geschäumte Kernschicht enthalten - wie gesagt - Additive wie Bortrioxid, Zinkborat oder Antimontrioxid, um die Wärmeentwicklung im Brandfall zu retardieren. Sie können ferner verstärkende Fasern, mineralische Zuschlagstoffe sowie Pigmente etc. enthalten.

Die aufgeschäumte Zwischenschicht wird vorteilhafterweise dadurch erzeugt, daß dem Rohstoff ein Additiv (Zusatz) zugesetzt wird, das sich dadurch auszeichnet, daß es durch Konfektionieren (Compounding) in hinreichender Konzentration (0,1 % bis 25 %) in die Polymeren eingearbeitet und darin dispergiert werden kann, ohne daß gasförmige Zersetzungsprodukte entstehen und das bei höheren Temperaturen (240°C bis 400°C) extrudiert werden kann, dabei gasförmige Produkte abspaltet und das Polymer in eine Schaumschicht verwandelt.

Unter Umweltschutz-, Arbeitsplatzhygiene- und Sicherheitsaspekten sind anorganische Zusätze, die bei Temperaturen oberhalb von z.B. 220°C Wasser, Kohlendioxid oder andere nicht-toxische Gase abspalten, geeignet. Besonders geeignete Additive sind kristallwasserhaltiges Zinkborat, Magnesiumhydroxid, Magnesiumcarbonat, Dolomit oder Calciumcarbonat.

Die zur Schaumbildung benötigten Additive werden in möglichst feinverteilter Form dem Polymeren zugesetzt.

Additive, die erst über 280°C gasförmige Produkte abspalten, können mit einem Konfektionierextruder bei 280°C mit den Polymeren vermischt werden.

Es ist darüberhinaus möglich, dem Polymeren in geringer Konzentration Lösungsmittel zuzusetzen, die Erweichungstemperatur herabzusetzen und die Additive bei noch niedrigeren Temperaturen im Polymeren zu dispergieren.

Beispiel 1:

Eine 60 mm dicke Platte wurde durch Coextrusion hergestellt.

Für die vorgesehene 1 mm starke Deckschicht wurde Polyethersulfon (PES) verwendet (eingesetzt wurde ULTRASON® der BASF), das 7,5 % wasserfreies Zinkborat enthielt.

Für den Kern der Platte wurde der gleiche Rohstoff vorgesehen, dem 3 % Zinkborat mit 14,5 % Kristallwasser beigemischt war.

Aus der Düse der Extrusionsanlage trat eine dreischichtige Masse aus, deren Dicke durch die Fördermenge des mittleren Extruders und mittels eines Walzenwerks auf 30 mm eingestellt wurde. Die Temperatur der Werkstoffe erreichte in der letzte Stufe des Extruders 360°C.

Die Dichte der Platte betrug 250 g/dm$^3$, die einer vergleichbaren massiven Platte aus PES/Zinkborat (92,5 %/7,5 %) beträgt 1.480 g/dm$^3$.

Die Prüfung der Platte ergab die folgenden Kennwerte:

| FAR 25.853 | Meßwert | Max.zul.Wert |
|---|---|---|
| HRR (KW/m$^2$) <br> HR (KW.min/m$^2$) | 50 | 65 |

| ATS 1000.001 | Meßwert | Max.zul.Wert |
|---|---|---|
| $D_S$ | < 10 | 200 |
| CO (ppm) | < 100 | 3.500 |
| SO$_2$/H$_2$S (ppm) | 50 | 100 |

Die wirtschaftlichen Vorteile der erfindungsgemäß hergestellten Leichtbauplatte werden deutlich, wenn man deren Eigenschaften mit denen herkömmlicher Verbundwerkstoffe vergleicht:

Im Gegensatz zu herkömmlichen Verbundwerkstoffplatten lassen sich die erfindungsgemäß hergestellten Platten durch Pressen oder Tiefziehen bei Temperaturen über 230°C verformen. Die erfindungsgemäß hergestellten Platten stellen also Halbzeug dar, aus dem flache oder gebogene, flächige Teile geformt werden können, wie sie im Flugzeuginnenausbau verwendet werden.

In diese Teile können auch Verzierungen oder funktionelle Formelemente eingepreßt werden (Halterungen für Tassen/Gläser auf Tischen in Flugzeugen, Griffe, Sicken zur Versteifung der Platten, usw.).

Beispiel 2:

Eine 20 mm dicke Platte wurde durch Coextrusion hergestellt.

Für die 1 mm dicke Deckschichten wurde Polyethersulfon (PESU) verwendet; eingesetzt wurde ULTRASON E3010 gefärbt der BASF, das 2 % Titandioxid und Buntpigment enthielt.

Für den Kern der Platte wurde ULTRASON E3010 eingesetzt, das 5 % Magnesiumhydroxid (MAGNIFIN H 10 der Fa. MARTINWERK) enthielt.

Die Temperatur der Werkstoffe erreichte in der Pumpzone des Extruders 360°C.

Aus der Düse der Zweikomponenten-Extrusionsanlage trat eine dreischichtige Masse aus, deren Dicke mittels eines Walzenwerks auf 20 mm eingestellt wurde.

Die Dichte der Platte betrug 495 g/cm$^3$. Die Prüfung der Platte ergab die folgenden Kennwerte:

| FAR 25.853 | Meßwert | Max.zul.Wert |
|---|---|---|
| HRR (KW/m$^2$) | 35 | 65 |
| HR (KW.min/m$^2$) | 30 | 65 |

| ATS 1000.001 | Meßwert | Max.zul.Wert |
|---|---|---|
| $D_S$ | < 10 | 200 |
| CO (ppm) | < 100 | 3.500 |
| SO$_2$/H$_2$S (ppm) | 80 | 100 |

**Patentansprüche**

1. Thermoplastisch verformbare, mehrschichtige Platte, bestehend aus mindestens einer Deckschicht und einer zweiten, durch Aufschäumen erhaltenen Schicht bzw. Mittelschicht, wobei mindestens die bzw. eine der Schichten mit einem brandverzögernden Zusatz versetzt ist und im übrigen im wesentlichen aus einem hochtemperaturbeständigen Polymerwerkstoff, ausgewählt aus Polysulfon, Polyethersulfon, Polyetherimid und Polyetherketon besteht.

2. Platte nach Anspruch 1, enthaltend als brandverzögernden Zusatz insbesondere Boroxid, Zinkborat und/oder Antimontrioxid.

3. Platte nach Anspruch 1, dadurch gekennzeichnet, daß die geschäumte Schicht bzw. Mittelschicht aus dem gleichen Werkstoff wie die Deckschicht(en) besteht.

4. Verfahren zur Herstellung der Platte nach Anspruch 1 durch gleichzeitige Extrusion der für Deckschicht(en) und Mittelschicht bestimmten Rohstoffe (Co-Extrusion) mit vorzugsweise zwei auf eine gemeinsame Schlitzdüse arbeitenden Extrudern.

5. Verfahren zur Herstellung der Platte gemäß Anspruch 1, dadurch gekennzeichnet, daß man die Mittelschicht extrudiert und anschließend deren Oberfläche(n) thermisch behandelt und zu Deckschicht-(en) formt.

6. Verfahren nach den Ansprüchen 4 und 5, wobei die aufgeschäumte Mittelschicht dadurch erzeugt wird, daß dem Rohstoff ein Additiv (Zusatz) zugesetzt wird, das während der Extrusion ein oder mehrere gasförmige Produkte abspaltet, die die Schaumstruktur bilden.

7. Verfahren nach den Ansprüchen 4 und 5, dadurch gekennzeichnet, daß ein anorganischer Zusatz, der bei Temperaturen oberhalb von z.B. 220°C Wasser abspaltet, verwendet wird.

8. Verfahren nach Anspruch 6, dadurch gekennzeichnet, daß als Zusatz Zinkborathydrat, Magnesiumhydroxid, Dolomit, Magnesiumcarbonat, Magnesiumhydrogencarbonat oder Calciumcarbonat verwendet wird.

4